Europäisches Patentamt

European Patent Office

Office européen des brevets

(11) Numéro de publication : **0 180 686**
**B1**

## (12) FASCICULE DE BREVET EUROPÉEN

(45) Date de publication du fascicule du brevet :
**11.01.89**

(21) Numéro de dépôt : **84810528.4**

(22) Date de dépôt : **01.11.84**

(51) Int. Cl.⁴ : **B 23 B 13/02**

(54) **Dispositif guide barre pour tour multibroche.**

(43) Date de publication de la demande :
**14.05.86 Bulletin 86/20**

(45) Mention de la délivrance du brevet :
**11.01.89 Bulletin 89/02**

(84) Etats contractants désignés :
**CH DE FR GB IT LI SE**

(56) Documents cités :
EP--A-- 0 071 518
EP--A-- 0 121 638
FR--A-- 2 319 446
US--A-- 2 300 457

(73) Titulaire : **SAMECA S.A.**
**Route de Diesse**
**CH-2516 Lamboing (CH)**

(72) Inventeur : **Juillerat, Pierre**
**Jolimont 23**
**CH-2740 Moutier (CH)**

(74) Mandataire : **Steiner, Martin et al**
**c/o AMMANN INGENIEURS-CONSEILS EN PRO-**
**PRIETE INTELLECTUELLE SA BERNE Schwarztor-**
**strasse 31**
**CH-3001 Bern (CH)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif guide barre pour un tour multibroche, avec un barillet comportant une pluralité de tubes de guidage, chacun de ces tubes supportant une barre à usiner en rotation dans un fluide, l'arrière de la barre étant soutenu dans le tube de guidage par un piston-poussoir déplacé par la pression du fluide pour provoquer l'avance de la barre en direction du tour, le dispositif comprenant en outre un distributeur relié à des sources de fluide sous pression et de vide.

On connaît par la demande de brevet européen publiée EP 0 108 182 un dispositif guide barre pour tour multibroche avec un distributeur de fluide pour commander l'avance d'un piston-poussoir destiné à soutenir l'arrière de la barre dans son tube de guidage. Lors du chargement d'une nouvelle barre, le piston est retiré et reçu entièrement dans un logement du distributeur qui est alors tourné de manière à présenter une ouverture en face du tube vide à charger et une barre est introduite par cette ouverture dans le tube. Cependant, l'opération de retrait du piston-poussoir en vue du chargement nécessite l'arrêt du tour et la nouvelle barre doit être introduite axialement depuis l'arrière du distributeur, ce qui augmente l'encombrement du dispositif.

On connaît aussi par la demande de brevet européen publiée EP 0 121 638 un dispositif guide barre pour tour multibroche de conception similaire à celle du précédent. Lors du chargement d'une nouvelle barre, le piston-poussoir du tube à charger est retiré dans un tube de prolongement situé en bout et dans l'axe du tube guide barre et ce tube de prolongement avec le piston-poussoir est rabattu latéralement de manière à dégager l'entrée du tube de guidage et à permettre un apport latéral d'une nouvelle barre devant l'extrémité du tube à charger. Cependant, comme dans le cas précédent, l'opération de retrait du piston-poussoir en vue du chargement nécessite l'arrêt du tour.

Dans les tours multibroche modernes, on cherche à réduire au minimum les temps morts, tels que l'arrêt du tour pour permettre le retrait du piston-poussoir d'un tube dans lequel une nouvelle barre doit être introduite, afin d'accélérer le cycle d'usinage et la cadence de production. En outre, la conception des tours multibroche implique d'une part que la fin de l'usinage des différentes barres ne peut pas avoir lieu simultanément et que d'autre part, compte tenu des longueurs différentes possibles des barres et des tolérances de longueur des pièces usinées avec ces barres, la fin de l'usinage de chacune d'entre elles arrive, dans le temps, dans un ordre quelconque.

En conséquence, le but de la présente invention est de réaliser un dispositif guide barre pour un tour multibroche dans lequel les temps morts lors du chargement d'une nouvelle barre sont considérablement réduits, tout en respectant la condition que la fin de l'usinage de chaque barre se produise dans un ordre quelconque.

Pour atteindre ce but, le dispositif selon l'invention est réalisé comme défini dans la revendication 1.

Par le fait que le dispositif selon l'invention comporte un distributeur avec des circuits séparés de pression de fluide et de vide et des vannes ou tiroirs rotatifs ou linéaires de commutation, permettant de relier, dans n'importe quelle position angulaire du barillet, chacun des tubes guide barre au distributeur, soit au circuit de pression de fluide, soit au circuit de vide, il est possible de mettre sous pression ou sous vide n'importe quel tube guide-barre, dans n'importe quel ordre. En particulier, la détection de la fin d'une barre dans un tube déterminé, produit la mise sous vide de ce tube pour faire reculer le piston-poussoir vers l'arrière du dispositif, jusque dans son tube de prolongement.

La disposition du distributeur et des vannes selon l'invention permet alors d'effectuer ce recul du piston-poussoir pendant l'usinage (1 tour de barillet) de la dernière pièce dans la fin de la barre du tube mis sous vide, ce qui élimine le temps mort normalement prévu pour le retrait du piston dans le tube à charger. A titre d'illustration, il peut arriver dans les tours multibroche modernes que les barres soient usinées entièrement en 8 minutes. Si le retrait du piston du tube à charger se fait en 20 à 30 secondes, l'élimination de ce temps mort représente sur un ensemble de 6 barres par exemple, un gain de 25 à 30 % du temps d'usinage.

Un mode particulier de réalisation de l'invention va être décrite plus en détail ci-après, à titre d'exemple et à l'aide du dessin dans lequel :

La figure 1 est une vue longitudinale en coupe selon la ligne I-I de la figure 5 du dispositif selon l'invention,

La figure 2 est une vue en coupe du dispositif selon la ligne II-II de la figure 3,

La figure 3 est une vue en coupe du dispositif selon la ligne III-III de la figure 2,

La figure 4 illustre les opérations d'indexage pendant un cycle de chargement,

La figure 5 est une vue en coupe du dispositif selon la ligne V-V de la figure 1,

La figure 6 est une vue en coupe du dispositif selon la ligne VI-VI de la figure 1,

Les figures 7 et 8 montrent schématiquement la commande des vannes de commutation,

La figure 9 est une vue en coupe du distributeur selon la ligne IX-IX de la figure 1, et

La figure 10 montre une coupe de la vanne 32.

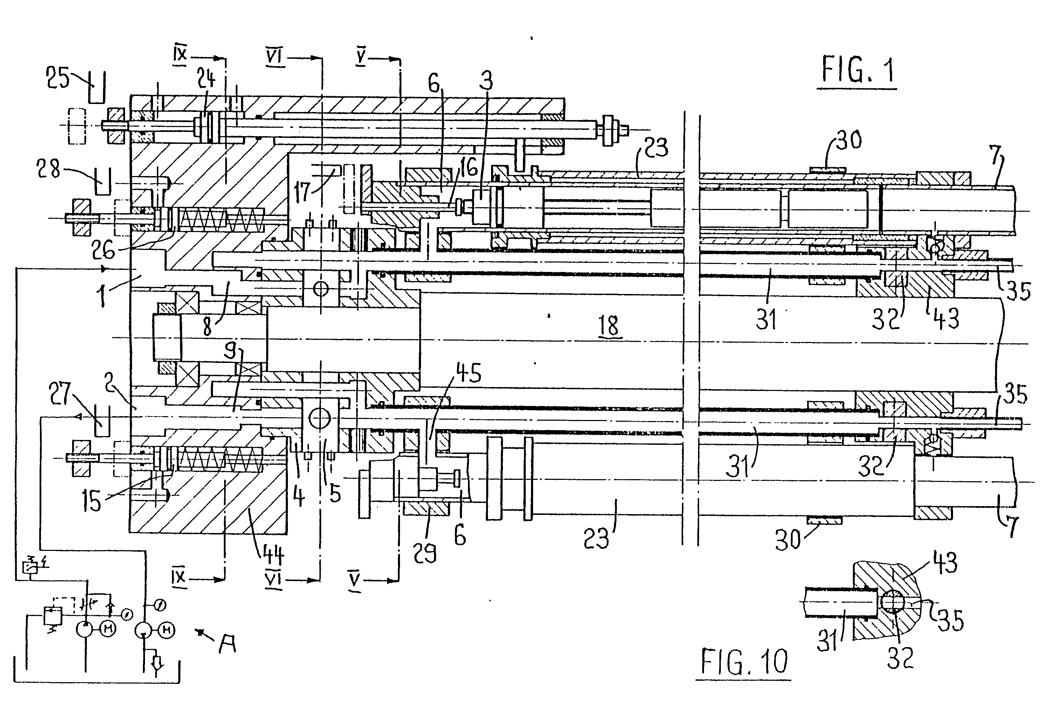

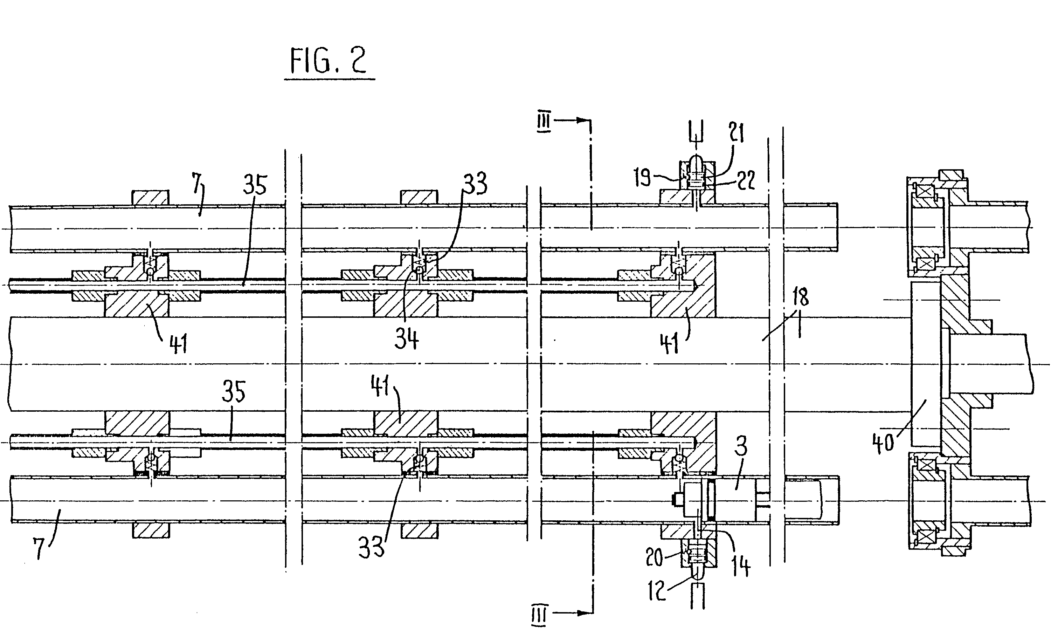

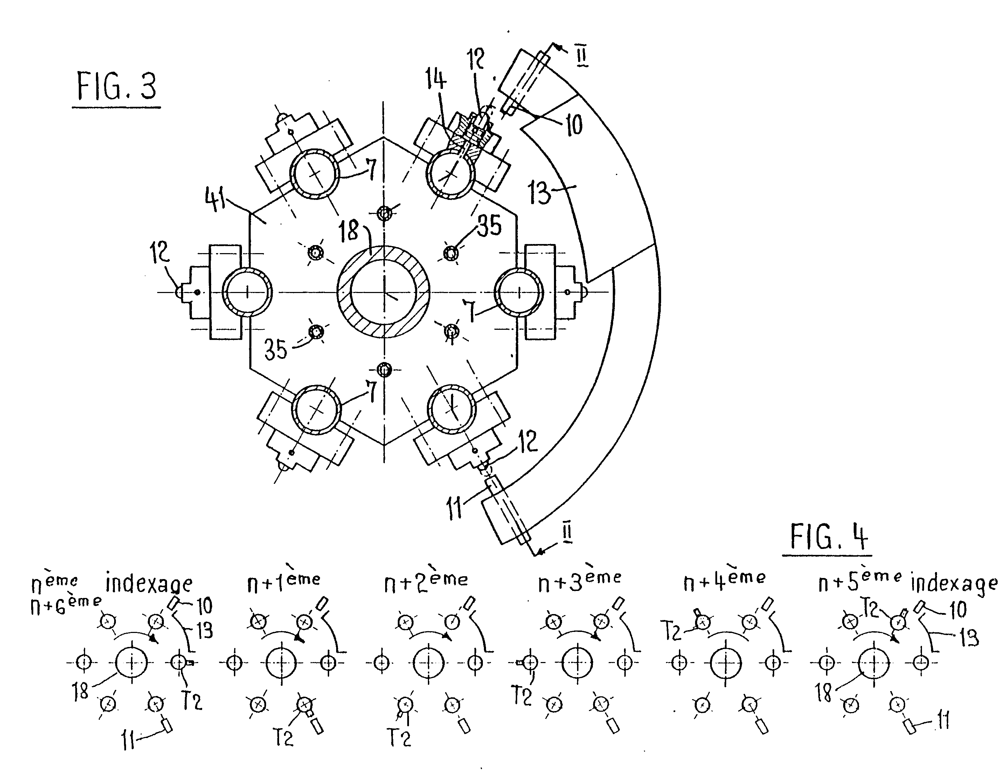

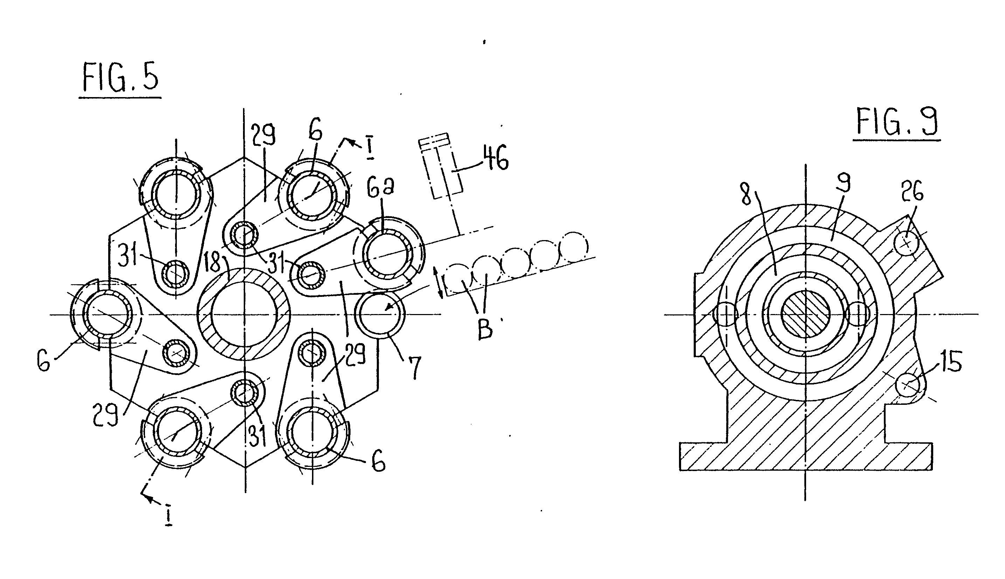

La figure 1 et la figure 2 qui est le prolongement vers la droite de la figure 1, montrent (v. aussi fig. 3) que le dispositif selon l'invention comporte un barillet avec une flasque avant 40 destiné à être monté à l'arrière du tour multibroche, des disques intermédiaires 41 et un disque arrière 43. Ce barillet comporte des tubes de guidage 7 des barres à usiner et des tubes de prolongement 6 associés à chacun des tubes de guidage et destinés à recevoir des pistons-poussoirs 3 lors du chargement d'une nouvelle barre dans un tube de guidage vide. Les pistons-poussoirs 3 soutiennent l'arrière des barres à usiner et servent à provoquer l'avance de ces barres dans les tubes de guidage 7, en direction du tour.

Comme indiqué en figure 5, les tubes de prolongement sont montés sur des biellettes 29, 30 susceptibles de pivoter autour de l'axe d'arbres tubulaires 31 montés entre le distributeur 4 et un disque 43 du barillet. La figure 5 montre la position du tube de prolongement 6a qui est situé normalement à 3 heures, vu de l'arrière, lors du chargement d'une nouvelle barre B dans le tube de guidage correspondant. On voit que le tube de prolongement a été déplacé latéralement, parallèlement à lui-même, par pivotement des biellettes 29, 30 autour de l'axe de l'arbre creux 31. Ce déplacement latéral libère l'entrée du tube de guidage 7 devant lequel, comme indiqué en figure 5, la nouvelle barre B peut être amenée latéralement. Pour permettre le déplacement latéral du tube de prolongement 6, il faut désaccoupler celui-ci d'avec le tube de guidage 7. Ceci est réalisé, comme indiqué en figure 1, par un déplacement vers l'arrière d'un baladeur 23 à l'aide d'un dispositif de commande 24 (vérin hydraulique ou pneumatique ou similaire). Ce dernier remet en place le baladeur 23 par déplacement vers l'avant (vers la droite en figure 1) lorsque la nouvelle barre est entièrement introduite dans son tube de guidage 7 et que le tube de prolongement 6 a été remis à 3 heures. La figure 1 montre que le dispositif de commande 24 est monté sur une partie fixe du dispositif selon l'invention alors que les baladeurs 23 reliant les tubes de guidage 7 aux tubes de prolongement 6 sont montés dans le barillet rotatif.

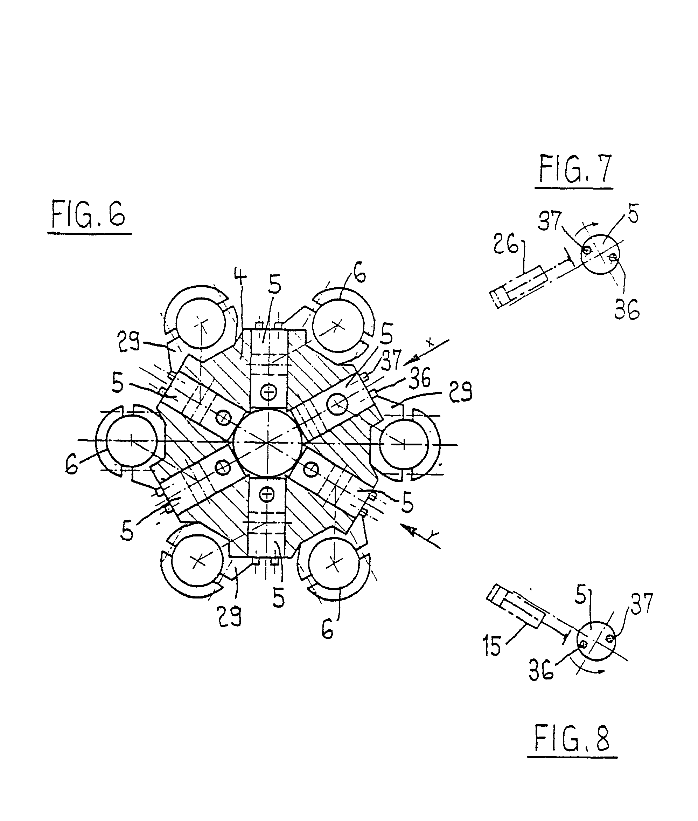

La commande des pistons-poussoirs pour l'avance des barres à usiner, la lubrification formant palier hydrodynamique entre la barre et la paroi intérieure de son tube de guidage et le vide nécessaire au retrait du piston-poussoir du tube comportant la fin de la barre dans laquelle la dernière pièce est usinée, sont donnés par un système de distribution comportant les arbres creux 31 et les conduites 35 couplées à ces derniers et les biellettes 29. Comme indiqué en figure 1, la biellette 29 est reliée par une ouverture 45 au tube 31 afin de permettre le passage d'un fluide hydraulique entre ce tube 31 et l'arrière du tube de prolongement 6. Ce fluide hydraulique agit sur l'arrière du piston-poussoir 3, ce qui provoque après chaque tour du barillet, le déplacement vers l'avant de la barre à usiner. Par ailleurs, le système de distribution sert également à l'aspiration du fluide lorsque l'on est couplé sur le circuit de vide. Le fluide est injecté radialement entre la barre et le tube de guidage 7 pour former palier hydrodynamique, par les orifices 33 prévus dans les disques intermédiaires 41 et le disque arrière 43 et reliés avec les conduites 35. Ces orifices 33 sont pourvus de soupapes anti-retour 34 (figure 2) qui ont pour fonction d'isoler les conduites 31, 35 lors de la mise sous vide d'un des tubes 6, 7. L'extrémité arrière des conduites 31 est montée dans un distributeur 4 tournant avec le barillet. Comme indiqué en figure 6, ce distributeur comporte pour chaque tube de guidage une vanne ou tiroir de commutation ou d'aiguillage, rotatif ou linéaire 5. Chaque vanne est reliée par sa sortie avec l'arbre creux 31 correspondant et par ses entrées respectivement avec une première gorge annulaire 8 et une seconde gorge annulaire 9 dans la partie arrière fixe 44 du dispositif. Les gorges annulaires 8 et 9 (figure 9) s'étendent sur 360° et elles sont reliées respectivement à une source d'huile sous pression 1 et à une pompe à vide 2. Les gorges annulaires de la figure 9 ne sont qu'un exemple d'exécution et il est clair que des lumières telles que perçages ou trous oblongs peuvent aussi être utilisés. La vanne 5 dont l'axe fait un angle de — 30° avec l'horizontale en figure 6 est actionnée par un dispositif de commande 15 représenté dans les figures 1 et 8 et qui peut être un vérin hydraulique ou pneumatique ou similaire et la vanne dont l'axe fait un angle de + 30° avec l'horizontale en figure 6 est actionnée par un dispositif de commande 26 représenté dans les figures 1 et 7 et similaire au dispositif 15. La disposition décrite ci-dessus du distributeur 4 et des vannes 5 permet au choix de mettre sous pression ou sous vide n'importe quel tube de guidage, dans n'importe quel ordre. Comme indiqué en figure 1, les dispositifs de commande 15 et 26 sont montés dans une partie fixe du dispositif selon l'invention, tandis que les tiroirs de commutation 5 sont logés dans le distributeur rotatif 4.

Les dispositifs 15 et 26 sont, comme indiqué dans les figures 3 et 4, actionnés par des détecteurs 10 et 11 qui peuvent être des minirupteurs, des détecteurs de proximité ou similaires. A chaque tube de guidage 7 (figures 2 et 3) est associé un doigt 12 à deux positions destiné à coopérer avec les détecteurs 10 et 11. Lorsque l'orifice 14 est dégagé par l'arrière du piston-poussoir 3 du tube 7 contenant la fin de la barre dans laquelle la dernière pièce est usinée, la pression hydraulique régnant dans ce tube 7 fait sortir le doigt 12 dans la position indiquée dans la partie inférieure de la figure 2 et en pointillé dans la figure 3. Une came 13 (figure 3) repousse le doigt vers l'intérieur au cours de l'indexage du barillet. Les deux positions du doigt 12 sont assurées par la bille 19, le ressort 20 et les rainures 21 et 22. Les détecteurs 10 et 11 permettent de saisir les informations « fin de barre » et « préparation arrêt du tour » délivrées lorsque le doigt 12 du tube contenant la fin de barre est sorti et que ce même doigt passe respectivement devant le détecteur 11 et le détecteur 10. Ce qui précède montre que l'information « fin de barre » est mémorisée pendant l'indexage du barillet par la position sortie du doigt 12. Pour le fonctionnement, voir plus loin la description d'un cycle de chargement. Une vanne 32 (v. figure 10) permet de régler le débit du fluide de sustentation entrant dans le tube 7 par les orifices 33.

Dans la figure 1 est indiqué en A le schéma des sources de pression de fluide et de vide contenant des éléments en soi connus, ces sources étant reliées respectivement aux entrées 1 et 2 du système de distribution.

Les éléments les plus importants pour la présente invention ayant été décrits ci-dessus, nous pouvons maintenant examiner le fonctionnement du dispositif au cours d'un cycle de chargement, avec référence aux figures 1, 3 et 4. Un cycle de chargement se déroule selon l'ordre chronologique suivant :

1. n-ième indexage (v. figure 4). Lors de l'ouverture de la pince du tour, la barre du tube no 2, désigné par T2, est avancée par le piston-poussoir 3 pour l'usinage de la pièce suivante. Au cours de cette avance, l'arrière du piston-poussoir découvre l'orifice 14 de T2. La pression de fluide repousse le doigt 12 vers l'extérieur. Cette position du doigt 12 mémorise l'état « fin de barre » du tube T2.

2. n + 1-ième indexage. Le doigt 12 s'arrête devant le détecteur 11 qui délivre le signal « fin de barre ». Ce signal actionne le dispositif de commande 15 (contrôlé par le détecteur 27) qui commute la vanne 5 de manière à relier le tube T2 à la source de vide. Dès ce moment, et au cours des indexages suivants n + 2, n + 3, n + 4 et n + 5, le piston-poussoir 3 recule jusqu'à la partie arrière du barillet dans son tube de prolongement 6 (v. figure 1, partie supérieure).

3. Lorsque le piston-poussoir arrive à l'arrière de son tube de prolongement 6, il pousse l'axe 16 vers l'arrière et celui-ci, agissant sur le détecteur 17, fait délivrer à ce dernier un signal « piston-poussoir en arrière ».

4. n + 6-ième indexage. Le doigt 12 qui est resté dans sa position sortie depuis le n-ième indexage, passe devant le détecteur 10 qui délivre un signal « préparation arrêt du tour ». Ce signal a pour but de commander l'arrêt du tour à la fin de ce n + 6-ième indexage. En outre, le doigt 12 est repoussé à l'intérieur lorsque, au cours du présent indexage, il passe sous la came 13 et il est ainsi à nouveau prêt pour la fonction d'information qui lui est dévolue.

5. La coïncidence des signaux « arrêt du tour », ce dernier étant donné par le tour lui-même à la fin du n + 6-ième indexage et « piston en arrière » commande le désaccouplement des tubes de guidage 7 et de prolongement 6 par le baladeur 23 actionné par le dispositif de commande 24. Le déplacement de ce dispositif est contrôlé par le détecteur 25.

6. Le signal délivré par le détecteur 25 lorsque les tubes 6 et 7 sont désaccouplés, enclenche la séquence de chargement d'une nouvelle barre. Cette séquence consiste à déplacer latéralement le tube 6 par rotation des biellettes 29, 30 autour de l'axe du tube creux 31 afin de dégager l'entrée du tube de guidage 7, à amener latéralement une nouvelle barre devant ce tube, à introduire cette barre dans le tube et à remettre le tube de prolongement 6 dans sa position initiale de travail. Les moyens de chargement de la nouvelle barre ne sont pas décrits car ils ne font pas partie de la présente invention.

7. Nouvel accouplement des tubes 6 et 7 par le baladeur 23 et le dispositif de commande 24 sur ordre manuel ou automatique, lorsque la nouvelle barre est entièrement insérée dans le tube de guidage et que le tube de prolongement 6 est arrivé dans sa position initiale de travail.

8. Le signal délivré par le détecteur 25 lorsque les tubes 6 et 7 sont à nouveau accouplés, actionne le dispositif de commande 26 contrôlé par le détecteur 28 pour provoquer la commutation de la vanne 5 de manière à relier à nouveau le tube T2 au circuit de pression de fluide. La nouvelle barre est alors poussée vers l'avant par le piston-poussoir 3 jusqu'à ce qu'elle vienne buter contre la chute qui est restée serrée dans la pince de la broche no 2 du tour.

9. L'ouverture de la pince du tour provoque l'éjection de la chute par la nouvelle barre et le cycle automatique d'usinage peut se répéter.

Dans ce qui précède, il a été admis (au point 6) que le basculement du tube de prolongement associé au tube de guidage contenant la fin d'une barre, est effectué manuellement. La figure 5 montre que le basculement du tube de prolongement 6a peut être rendu automatique à l'aide d'un vérin hydraulique ou pneumatique ou similaire 46 commandé par exemple par le détecteur 25 lorsque le baladeur 23 est retiré par le dispositif 24 pour désaccoupler les tubes de guidage et de prolongement.

La description précédente montre que le retrait du piston-poussoir vers l'arrière du tube de guidage contenant la fin de barre dans laquelle la dernière pièce est usinée, est exécuté pendant les opérations d'indexage n + 1, n + 2, n + 3, n + 4 et n + 5. En conséquence, le retrait du piston-poussoir ne nécessite aucun temps mort. Par le fait que chaque tube de guidage 7 comporte un doigt 12 de mémorisation de la condition « fin de barre », cette condition étant toujours mise en mémoire dans la position du tube T2 de la figure 4 et que le signal « fin de barre » actionne la vanne 5 pour mettre le tube en question sous vide pour le retrait du piston-poussoir, le dispositif selon l'invention permet de mettre n'importe quel tube sous pression de fluide ou sous vide, et ceci dans n'importe quel ordre.

**Revendications**

1. Dispositif guide-barre pour un tour multibroche, avec un barillet rotatif indexé par le tour multibroche et comportant une pluralité de tubes de guidage (7), chacun de ces tubes supportant une barre à usiner en rotation dans un fluide, l'arrière de la barre étant soutenu dans le tube de guidage (7) par un piston poussoir (3) déplacé par la pression du fluide pour provoquer l'avance de la barre en direction du tour, le dispositif comprenant en outre un distributeur relié à des sources de fluide sous pression et de vide, caractérisé en ce que le distributeur comprend des moyens de commutation (5) comportant une vanne ou un tiroir rotatif ou linéaire pour chaque tube de guidage (7) et permettant de relier chaque tube de guidage soit à une source de fluide sous pression, soit à une source de vide, les moyens de commutation (5) étant commandés de manière à mettre sous pression ou sous vide n'importe quel tube de guidage dans n'importe quel ordre, la mise sous vide d'un tube de guidage contenant la fin d'une barre à usiner provoquant le retrait du piston-poussoir (3) de ce tube vers l'arrière du dispositif au cours de l'indexage du barillet pendant l'usinage de la dernière pièce.

2. Dispositif selon la revendication 1, caractérisé en ce que l'alimentation en fluide sous pression, respectivement la mise sous vide du distributeur sont réalisées par des lumières (8, resp. 9) dans une partie fixe du dispositif, les lumières étant reliées respectivement à une source de fluide sous pression (1) et à une source de vide (2).

3. Dispositif selon la revendication 2, caractérisé en ce que les lumières sont des gorges annulaires (8, 9) s'étendant sur 360°.

4. Dispositif selon l'une quelconque des revendications 1 à 3, caractérisé en ce qu'un tube de prolongement (6) est associé à chaque tube de guidage (7), le tube de prolongement recevant le piston-poussoir (3) lors du chargement d'une nouvelle barre à usiner.

5. Dispositif selon la revendication 4, caractérisé en ce que le tube de prolongement (6) peut basculer latéralement autour de l'axe d'un arbre (31) du dispositif, afin de dégager l'ouverture du tube de guidage (7) destiné à recevoir la nouvelle barre.

6. Dispositif selon la revendication 4, caractérisé en ce que, lors du chargement d'une nouvelle barre, le tube de prolongement (6) est désaccouplé du tube de guidage (7) par un baladeur (23) actionné par un dispositif de commande (24) lorsque le piston-poussoir (3) est retiré à l'arrière du tube de prolongement (6).

7. Dispositif selon la revendication 4, caractérisé en ce que les moyens de commutation (5) sont des tiroirs de commutation rotatifs ou linéaires reliant le distributeur aux tubes de guidage (7) et de prolongement (6) par des conduites de distribution (31, 35).

8. Dispositif selon l'une quelconque des revendications 1 à 7, caractérisé en ce que chaque tube de guidage (7) comprend des moyens susceptibles de mémoriser la condition « fin de barre » de ce tube.

9. Dispositif selon la revendication 8, caractérisé en ce qu'il comprend des moyens de détection (10, 11) susceptibles de lire l'état des moyens de mémorisation et de commander les moyens de commutation (5) en fonction dudit état par l'intermédiaire de moyens de commande (15, 26).

10. Dispositif selon la revendication 9, caractérisé en ce que les moyens de commande (15, 26) sont montés dans une partie fixe du dispositif et qu'ils commandent les moyens de commutation (5) situés dans le distributeur rotatif (4).

11. Dispositif selon la revendication 9, caractérisé en ce que les moyens de détection sont des minirupteurs, détecteurs de proximité ou similaires et en ce que les dispositifs de commande sont des vérins hydrauliques ou pneumatiques ou similaires.

12. Dispositif selon la revendication 9, caractérisé en ce que les moyens de mémorisation sont un doigt (12) susceptible d'occuper une position rentrée et une position sortie, ces positions étant assurées par des moyens d'arrêt (19, 20, 21, 22).

13. Dispositif selon la revendication 12, caractérisé en ce que la condition « fin de barre » est donnée lorsque, au moment de l'avance de la barre à l'ouverture d'une des pinces du tour, l'arrière du piston-poussoir (3) découvre une ouverture (14) à l'avant du tube de guidage (7), le fluide sous pression dans ce tube de guidage faisant passer le doigt (12) de sa position rentrée initiale à sa position sortie.

14. Dispositif selon la revendication 9, caractérisé en ce qu'il comprend des moyens (13) pour remettre le doigt (12) dans sa position rentrée initiale.

15. Dispositif selon la revendication 1, caractérisé en ce qu'il comprend des moyens de commande (24) montés dans une partie fixe du dispositif et commandant le déplacement d'un baladeur (23) permettant l'accouplement et le désaccouplement des tubes de guidage (7) et de prolongement (6).

## Claims

1. A guide bar device for multi-spindle lathe with a rotatable barrel operable to be indexed by said multispindle lathe and comprising a plurality of guiding tubes (7), each of said tubes supporting a bar stock to be machined set into rotation in a fluid, the rear part of the bar stock being supported in the guiding tube (7) by a feeding piston (3) shifted by the pressure of the fluid for causing the advance of the bar stock toward the lathe, the device further comprising a distributor connected to sources of fluid under pressure and of vacuum, characterized in that the distributor comprises switching means (5) including a rotating or linear valve or slide for each guiding tube (7) and permitting to connect each guiding tube either to a source of fluid under pressure or to a source of vacuum, the switching means (5) being controled in such a way as to set under pressure or under vacuum any guiding tube no matter in which order, the setting under vacuum of a guiding tube enclosing the remnant of a bar stok to be machined causing the feeding piston (3) of said guiding tube to retract toward the rear part of the device during the indexing of the barrel at the time of machining of the last piece.

2. A device according to claim 1, characterized in that the feeding of fluid under pressure, resp. the setting under vacuum of the distributor is achieved by passages (8, resp. 9) in a stationary part of the device, the passages being connected respectively to a source of fluid under pressure (1) and to a source of vacuum (2).

3. A device according to claim 2, characterized in that the passages are annular grooves (8, 9) extending upon 360°.

4. A device according to any one of the claims 1 to 3, characterized in that an extension tube (6) is associated to each guiding tube (7), the extension tube receiving the feeding piston (3) at the time of loading of a new bar stock to be machined.

5. A device according to claim 4, characterized in that the extension tube (6) can be tilted laterally about an axis of a shaft (31) of the device, in order to liberate the opening of the guiding tube (7) in which said new bar stock is to be received.

6. A device according to claim 4, characterized in that at the time of loading of a new bar stock, the extension tube (6) is uncoupled from the guiding tube (7) by a sliding element (23) actuated by a control device (24) when the feeding piston (3) is retracted to the rear part of the extension tube (6).

7. A device according to claim 4, characterized in that the switching means (5) are rotating or linear switching slides connecting the distributor to the guiding tubes (7) and extension tubes (6) by distributing pipes (31, 35).

8. A device according to any one of the claims 1 to 7, characterized in that each guiding tube (7) comprises means capable to memorize the condition « end of bar » of said tube.

9. A device according to claim 8, characterized in that it comprises detecting means (10, 11) capable to read the state of the memorizing means and to control the switching means (5) in function of said state through the medium of control means (15, 26).

10. A device according to claim 9, characterized in that said control means (15, 26) are mounted in a stationary part of the device and in that they control the switching means (5) located in the rotative distributor (4).

11. A device according to claim 9, characterized in that the detecting means are microswitches, proximity detectors or similar and in that the control devices are hydraulic or pneumatic jacks or similar.

12. A device according to claim 9, characterized in that the memorizing means are a finger (12) capable to occupy an internal position and an external position, said positions being determined by stopping means.

13. A device according to claim 12, characterized in that the condition « end of bar » is determined when, at the time of advancing of the bar stock, the rear part of the feeding piston (3) liberates an opening (14) at the front part of the guiding tube (7), the fluid under pressure in said guiding tube causing said finger to move from its initial, internal position to its external position.

14. A device according to claim 9, characterized in that it comprises means (13) for returning said finger in its initial, internal position.

15. A device according to claim 1, characterized in that it comprises control means (24) mounted in a stationary part of the device and controlling the shifting of a sliding element (23) permitting coupling and uncoupling of the guiding tubes (7) with the extension tubes (6).

**Patentansprüche**

1. Stangenzuführvorrichtung für eine Mehrspindel-Drehmaschine, mit einem von der Mehrspindel-Drehmaschine fortschaltbaren und eine Mehrzahl von Führungsrohren (7) aufweisenden drehbaren Magazin, wobei jedes dieser Führungsrohre eine zu bearbeitende, in einem Fluid rotierende Stange führt und das Ende der Stange im Führungsrohr (7) von einem durch den Druck des Fluids verschobenen Druckkolben (3) unterstützt wird, um das Vorrücken der Stange in Richtung der Drehmaschine zu bewirken, und wobei die Vorrichtung ausserdem einen mit Fluid-Druckquellen und Unterdruckquellen verbundenen Verteiler aufweist, dadurch gekennzeichnet, dass der Verteiler Schaltmittel (5) mit einem drehbaren oder linearen Schütz bzw. Schieber für jedes Führungsrohr (7) umfasst, die es erlauben, jedes Führungsrohr entweder an eine Fluid-Druckquelle oder an eine Unterdruckquelle anzuschliessen, wobei die Schaltmittel (5) so gesteuert werden, dass irgendein das Stangenende enthaltendes Führungsrohr in irgendeiner Reihenfolge unter Druck oder Unterdruck gesetzt werden kann, was den Rückzug des Druckkolbens (3) dieses Rohres zum Hinterteil der Vorrichtung bewirkt, während das Magazin weitergeschaltet und das letzte Stück bearbeitet wird.

2. Vorrichtung nach Anspruch 1, dadurch gekennzeichnet, dass die Versorgung mit Druckfluid, beziehungsweise das Herstellen von Unterdruck im Verteiler mit Durchlassen (8 bzw. 9) in einem festen Teil der Einrichtung bewerkstelligt wird, wobei die Durchlasse an einer Fluid-Druckquelle bzw. einer Unterdruckquelle angeschlossen sind.

3. Vorrichtung nach Anspruch 2, dadurch gekennzeichnet, dass die Durchlasse Ringnuten (8, 9) sind, die sich über 360° erstrecken.

4. Vorrichtung nach irgendeinem der Ansprüche 1-3, dadurch gekennzeichnet, dass jedem Führungsrohr (7) ein Verlängerungsrohr (6) zugeordnet ist, wobei das Verlängerungsrohr den Druckkolben (3) aufnimmt, während eine neue zu bearbeitende Stange eingeführt wird.

5. Vorrichtung nach Anspruch 4, dadurch gekennzeichnet, dass das Verlängerungsrohr (6) seitlich um die Achse einer Welle (31) der Einrichtung kippen kann, um die Oeffnung des die neue Stange aufzunehmenden Führungsrohrs (7) freizugeben.

6. Vorrichtung nach Anspruch 4, dadurch gekennzeichnet, dass das Verlängerungsrohr (6) während des Einführens einer neuen Stange durch einen von einer Steuervorrichtung (24) betätigten Schieber (23) vom Führungsrohr abgekoppelt wird, wenn der Druckkolben (3) in den Hinterteil des Verlängerungsrohres (6) zurückgezogen wird.

7. Vorrichtung nach Anspruch 4, dadurch gekennzeichnet, dass die Schaltmittel (5) drehbare oder lineare Schaltschieber sind, die den Verteiler über Verteilleitungen (31, 35) mit den Führungs- (7) und Verlängerungsrohren (6) verbinden.

8. Vorrichtung nach irgendeinem der Ansprüche 1-7, dadurch gekennzeichnet, dass jedes Führungsrohr (7) Mittel aufweist, um den Zustand « Stangenende » dieses Rohres zu speichern.

9. Vorrichtung nach Anspruch 8, dadurch gekennzeichnet, dass sie Erfassungsmittel (10, 11) aufweist, die den Zustand der Speichermittel erfassen und die Schaltmittel (5) je nach dem erwähnten Zustand mittels der Steuermittel (15, 26) steuern können.

10. Vorrichtung nach Anspruch 9, dadurch gekennzeichnet, dass die Steuermittel (15, 26) in einem festen Teil der Vorrichtung montiert sind und die Schaltmittel (5) steuern, die sich im drehbaren Verteiler (4) befinden.

11. Vorrichtung nach Anspruch 9, dadurch gekennzeichnet, dass die Erfassungsmittel Mikroschalter, Näherungsschalter o. dgl. sind, und dass die Steuermittel hydraulische oder pneumatische Zylinder o. dgl. sind.

12. Vorrichtung nach Anspruch 9, dadurch gekennzeichnet, dass die Speichermittel ein Finger (12) sind, der eine innere und eine äussere Stellung einnehmen kann, wobei diese Stellungen durch Arretiermittel (19, 20, 21, 22) gesichert sind.

13. Vorrichtung nach Anspruch 12, dadurch gekennzeichnet, dass der Zustand « Stangenende » dass gegeben ist, wenn das Hinterende des Druckkolbens (3) im Zeitpunkt des Vorrückens der Stange beim Oeffnen der Spindel der Drehmaschine eine Oeffnung (14) im Vorderteil des Führungsrohrs (7) freigibt, wobei das Druckfluid in diesem Führungsrohr den Finger (12) von seiner ursprünglichen inneren in die äussere Stellung bringt.

14. Vorrichtung nach Anspruch 9, dadurch gekennzeichnet, dass sie Mittel (13) aufweist, um den Finger (12) in seine ursprüngliche innere Stellung zurückzuführen.

15. Vorrichtung nach Anspruch 1, dadurch gekennzeichnet, dass sie in einem festen Teil der Vorrichtung montierte Steuermittel (24) aufweist, die die Verschiebung eines Schiebers (23) steuern, welche die Kopplung und Abkopplung des Führungs- (7) und des Verlängerungsrohrs (6) erlaubt.

FIG. 1

FIG. 10

EP 0 180 686 B1

FIG. 2

FIG. 3

FIG. 4

$n^{ème}$ indexage
$n+6^{ème}$

$n+1^{ème}$

$n+2^{ème}$

$n+3^{ème}$

$n+4^{ème}$

$n+5^{ème}$ indexage

FIG.5

FIG.9

EP 0 180 686 B1

FIG.6

FIG.7

FIG.8